# EUROPEAN PATENT APPLICATION

(11) **EP 2 711 395 A1**
(43) Date of publication of application: **26.03.2014**
(21) Application number: 11865482.1
(22) Date of filing: 16.05.2011
(51) Int. Cl.: C08L 95/00, C04B 26/26, E01C 7/26

(54) **BITUMINOUS MATERIAL AND USE THEREOF FOR THE CONSTRUCTION OF SUB-BALLAST**

(71) Applicant: Ocide Construcción, S.A., 46021 Valencia (ES); Agrupación Mediterránea de Ingeniería, S.A., 46020 Valencia (ES); Intercontrol Levante, S.A., 46240 Carlet (Valencia) (ES); Aglomerados Los Serranos, S.A., 03203 Elche (Alicante) (ES)
(72) Inventor: ALFARO ALBALAT, Sergio, E-46021 Valencia (ES); ALFARO ALBALAT, Javier, E-46021 Valencia (ES); AUÑON LOPEZ, Juan, E-46021 Valencia (ES); BERENGUER PRIETO, Jose Manuel, E-46021 Valencia (ES); MARTINEZ MELERO, Jose Manuel, E-46021 Valencia (ES); REAL HERRAIZ, Julia Irene, E-46021 Valencia (ES); VILLANUEVA SEGARRA, Antonio J., E-46021 Valencia (ES); MONTALBAN DOMINGO, María Laura, E-46021 Valencia (ES); REIG GIMENO, Inmaculada, E-46021 Valencia (ES); IBAÑEZ GARCIA, Isabel, E-46021 Valencia (ES); VILLALBA SANCHIS, Ignacio, E-46021 Valencia (ES)
(74) Representative: Temino Ceniceros, Ignacio
(86) International application number: PCT/ES2011/070351
(87) International publication number: WO 2012/156542

(57) **Abstract**

The present invention relates to a novel bituminous material using vulcanized rubber powder from out-of-use tires, and the use of the same for the construction of sub-ballast.

## Description

### Field of the invention

The present invention generally falls within the field of civil engineering and in particular refers to a bituminous mixture and its use.

### State of the art

The bituminous mixtures which usually receive the name of agglomerates are made up by a combination of aggregates and a hydrocarbon ligand, so that the aggregates are covered by a thin continuous film of this when they are mixed at high temperatures.

The bituminous mixtures are characterized by their complex behavior and the difficulty they have for its characterization and evaluation. In their project and dosage must be taken into account different and, occasionally, opposite properties such as stiffness or plastic deformation resistance, against other no less important as fatigue, or aging resistance, or their stickiness.

In order to manufacture the bituminous mixtures themselves the aggregates are classified into fractioris, from which it is made up the granulometry chosen for the mixture to be manufactured in each case, being usually considered separately the mineral powder (fraction that passes through the sieve 63 µm). The ligands of the mixture are involved in different ratios depending on the type of formulation used: between 3 and 10 per cent on the mass of aggregates (by volume, the ratio is between 8 and 25 per cent, approximately). The hydrocarbon ligands more usually used for bituminous mixtures are the asphalt bitumens of intermediate penetrations (35/50 and 50/70) and media and slow break bituminous emulsions, although ligands modified with polymer are increasingly used.

Bituminous mixtures can have very different characteristics. That is precisely what allows its use in many different applications. For the prevalence of the properties that interest in each case, it must be considered the qualities of constituent materials, its dosage and manufacture conditions and delivery of the mixture at the site.

Bituminous mixtures are materials whose mechanical behavior depends not only on the magnitude of supported tensions, but also of their implementation, in particular of the temperature and the speed of application. This is what is known as rheology of the material. Thus, the behavior of the mixtures is the result of the integration of the behavior of its components.

Only in certain conditions of service, that are low temperatures and high loads application speeds, bituminous mixtures have an elastic and lineal behavior. In the remaining conditions, they are to a greater or lesser extent non-elastic and non-linear.

The granular layer of sub-ballast, although correctly constructed, is vulnerable to dynamic forces and water saturation. This translates into an increase of maintenance costs of the way and construction and environmental problems due to the need for high thickness when the platform has a weak bearing capacity, by virtue of being a material with low elasticity modulus. In addition, there are also problems of variations of vertical rigidity at very short distances, these abrupt changes of rigidity produce an accelerated deterioration of the geometric quality of the way and, consequently, of the maintenance costs of the same. There are also potential contamination problems of the platform (since it is not a waterproof layer), which in some cases produces a deterioration that involves the need to carry out costly treatment operations of initial materials as well as the worsening of geometric quality of the way, and consequently an increase in maintenance costs. The classic granular sub-ballast does not contribute to the attenuation of vibrations to the environment.

In Spain are generated about 250,000 tons a year of out-of-use tires.

The mass manufacture of tires and the difficulties to make them disappear once used is one of the most serious environmental problems in recent years around the world.

In order to eliminate this waste was often used direct burning resulting in serious environmental problems since it produces emissions of gases containing particles harmful to the environment, although the storage is not less problematic since they cause stability problems due to the partial chemical degradation they suffer, and produce security problems at the dump yard.

There is therefore the need to recycle the out-of-use tires.

The present invention relates to a new bituminous material comprising the use of out-of-use tires, so that in addition to providing a new construction material, it solves pollution problems described in the state of the art.

### Explanation of the invention

Thus, in a first aspect, the present invention relates to a bituminous material comprising:
- 92-96.05 % by weight of aggregates
- 3.65-5.2% by weight of penetration bitumen 50/70, more in particular, comprises 4.5% ± 0.3% by weight of the mixture.
- 0.3-2% by weight of granular material, more in particular, comprises 0.5% ± 0.25% by weight of the sample.
characterized in that said granular material is vulcanized rubber powder with a granulometry of less than 0.5 mm from out-of-use tires.

In a more particular aspect of the present invention, the aggregates are formed by:
- 8-12% by weight of aggregate of the grading fraction comprised between 18-25 mm
- 12-17% by weight of aggregate of the grading fraction comprised between 12-18 mm
- 17-22% by weight of aggregate of the grading fraction comprised between 6-12 mm
- 46-54% of sand 0/5
- 3-7% of filler

In a more particular aspect, the aggregates of bituminous mixture of the present invention are characterized (under UNE EN 993-2 concerning the sieves of aggregates for bituminous mixtures, for a mixture of type AC 22 S and according to PG-3), in that:
- 100% of the aggregate passes through a sieve of 32 mm
- 90-100% of the aggregate passes through a sieve of 22 mm
- 70-88 % of the aggregate passes through a sieve of 16 mm
- 50-66% of the aggregate passes through a sieve of 8 mm
- 24-38% of the aggregate passes through a sieve of 2 mm
- 11-21% of the aggregate passes through a sieve of 0.5 mm
- 7-15% of the aggregate passes through a sieve of 0.25 mm
- 3-7% of the aggregate passes through a sieve of 0.063 mm

In a second aspect the present invention refers to the use of bituminous material described above for the construction of structures in public works, in particular for the formation of pavements for roads and streets, airports, industrial surfaces, sports courts, in lower layers of road surfaces for intense heavy traffic.

In a more particular aspect the bituminous material of the present invention is used for the construction of sub-ballast.

In the present invention sub-ballast refers to any structural section under ballast.

In a more particular aspect, the bituminous material of the present invention is used for the construction of railway structures.

In a third aspect, the present invention refers to a structure of type sub-ballast which includes the bituminous material described above.

### Brief description of the drawings

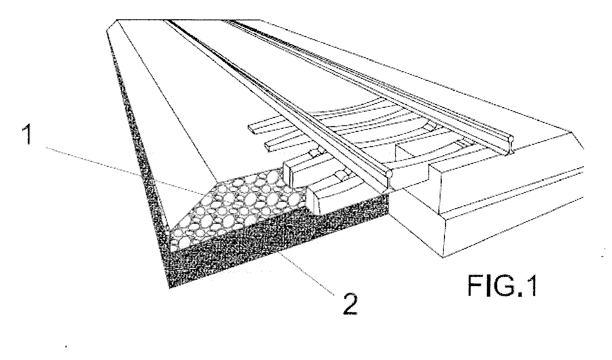

Figure 1 shows the structural section of railway grid.

### Detailed exposition of embodiments

### Example 1: Bituminous mixture

The bituminous mixture of the present invention comprises the following elements:

| **COMPOUND** | **% by weight with respect to the mixture** |
|---|---|
| Aggregates | 92.8-96.05 |
| Bitumen 50/70 | 3.65-5.2 |
| Vulcanized rubber powder from tires with 0.5 mm of granulometry | 0.3-2 |

The aggregates used in the bituminous mixture of the present invention were divided into two fractions, the bulk aggregate and the fine aggregate, depending on whether they were retained by the sieve 2 mm (UNE-EN 933-2) in which case they corresponded to the bulk fraction, whereas when they passed on the same, they corresponded to the fine fraction. Table 1 shows the distribution of aggregates of the present invention according to their granulometry that is observed below:

| Component of the grading fraction (mm) | Kg per ton of bituminous mixture |
|---|---|
| 18-25 | 95 |
| 12-18 | 150 |
| 6-12 | 193 |
| 0/5 | 471 |
| **FILLER** | 43 |

With regard to the bulk fraction, aggregates met the following characteristics:
- Maximum abrasion resistance (Los Angeles trial under une-en 1097-2) of 30% by weight.
- Around 90% of elements with two sides of fracture.
- Not excessive presence of flat or elongated elements.
- Non-hydrophilic material

For its part, the fine aggregate (passes through the sieve 2 mm and retained on the sieve 0.063 mm) was formed by a mixture of natural and fracturing sand.
In summary, the amounts utilized were:

| **No.** | Component of the grading fraction **(mm)** | **% with respect to the aggregates** | **% with respect to the mixture** |
|---|---|---|---|
| **1** | 18-25 | 9.98 | 9.5 |
| **2** | 12-18 | 15.76 | 15 |
| **3** | 6-12 | 20.27 | 19.2 |
| **4** | Sand 0/5 | 49.47 | 47.0 |
| **5** | FILLER | 4.52 | 4.3 |
| **6** | Bitumen | --- | 4.5 |
| **7** | Rubber | --- | 0.5 |
| **Total** | | 100 | 100 |

### EXAMPLE 2: Method for obtaining the bituminous mixture.

The bituminous mixture was made in an asphalt plant containing the necessary facilities for the heating of aggregates and the ligand, the dosing and mixing of the same in the given conditions.

As regards to the rubber as unique material present in mixtures that are handled in the present invention it's appropriate to mention that, currently, are established two methods for the incorporation of the rubber powder from NFU: the so-called wet mix process and the dry mix process. In the wet mix process, the powder of NFU is incorporated to the asphalt bitumen prior to its introduction in the kneader of the manufacturing plant of the hot bituminous mixture, being obtained bitumen modified or improved by the rubber.

Aggregates were transported from hoppers to the dryer of the plant through a conveyor or a bucket elevator. In the dryer, in addition to drying aggregates these were heated up to the necessary temperature for mixing with the ligand. After the theoretical determination of the dosage to be achieved, the different materials are incorporated into the mixer in the appropriate proportions. All materials were kneaded in the mixer and mixed at a temperature of between 175-180 °C (being around 5-10 °C higher than a conventional mixture, i.e. without tire).

The incorporation of tire powder to the mixture was made by "dry mix" process, given that the crushed tire powder was introduced considering it as an aggregated, either being added directly to the mixer in the quantity required for each kneading (discontinuous plant) or previously mixed with some stone component of the mixture before the manufacturing (continuous plant). For performing this method only it was necessary a feed system (a silo with dosing scale) which provided the desired amount of rubber powder and that incorporated it to the mixture at the time that the aggregates reached a certain temperature and before the bitumen was added.

The finer particles of rubber powder interacted with the bitumen modifying their properties, obtaining thus the improvement of the bituminous mixture behavior.

Tire rubber powder was made up of various natural and synthetic polymers: natural 'rubber (NR), styrene butadiene (SBR), polybutadiene (BR), synthetic polyisoprenes (IR), among others, in such a way that it modified the bitumen of asphalt mixtures.

In the bituminous mixture of the present invention, the dosage of bitumen increased by the presence of tire particles, so the mixture contained higher bitumen content. On the other hand, the storage conditions of rubber powder incorporated into the mixture by the dry mix process did not affect the manufacturing process or the quality of mixtures in the plant.

The digestion process (process by which rubber passes from being an "elastic aggregate" to being a modifier of the bitumen and the bituminous mixture) lasted less than an hour. Rubber swelled in contact with bitumen and it had to be left some time for the delivery at the site. However, the reaction occurred during transport, so it was not necessary special attention.

### EXAMPLE 3: construction of the sub-ballast with the bituminous mixture and grilled type construction of railway.

After the manufacture of the bituminous mixture of the present invention, the transportation of the same was carry out by trucks with metallic cargo box, perfectly watertight and covered.

The spreading of the bituminous material was performed with appropriate spreader machines and provided with heated vibrating plates together with a leveling system in order to ensure that the final surface of the spread and compacted stratum was perfectly formed and in accordance with the profile and the slope of project. The temperature of the mixture during said operation was between 130 and 150 °C.

In order to avoid disruptions during the work of delivery at the site which lead to irregularities, the forward speed of the spreader machines was regulated in order to make compatible the spreading with the supply of the bituminous mixture. The compaction of the mixture was carried out immediately after the spreading of the same, with compactors that allowed an adequate and uniform compaction.

Figure 1 shows the structural section of the type of railway grid of the present invention, made up by the rail system-seat plate-fastening-sleeper, which sits in a support consists of a ballast layer (2), under which is the sub-ballast layer (1) itself that serves as a base for the ballast border.

## Claims

1. Bituminous material comprising:
- 92-96.05% by weight of aggregates
- 3.65-5.2% by weight of penetration bitumen 50/70
- 0.3-2% by weight of granular material
**characterized in that** said granular material is vulcanized rubber with granulometry of less than 0.5 mm from out-of-use tires.

2. Bituminous material according to claim 1 where the aggregates are made up by:
- 8-12% by weight of aggregate of the grading fraction comprised between 18-25 mm
- 12-17% by weight of aggregate of the grading fraction comprised between 12-18 mm
- 17-22% by weight of aggregate of the grading fraction comprised between 6-12 mm
- 46-54% of sand 0/5
- 3-7% of filler

3. Use of bituminous material according to claims 1-2 for the construction of public works structures.

4. Use of bituminous material according to claims 1-2 for the construction of sub-ballast.

5. Use according to any of claims 3-4, for the construction of railway structures.

6. Sub-ballast comprising the bituminous material according to claims 1-2.
